# EUROPÄISCHE PATENTSCHRIFT

(11) **EP 1 762 841 B1**
(45) Veröffentlichungstag und Bekanntmachung des Hinweises auf die Patenterteilung: **23.12.2009**
(21) Anmeldenummer: 06018167.4
(22) Anmeldetag: 31.08.2006
(51) Int. Cl.: G01N 29/26, G01N 29/30, G01N 29/07, G01N 29/34

(54) **Verfahren und Einrichtung zur Ultraschallprüfung eines Werkstückes mit einer unebenen Oberfläche**
Method and device for ultrasonic testing of a workpiece having an uneven surface
Procédé et dispositif destinés à la surveillance par ultrasons d'un échantillon ayant une surface inégale

(30) Priorität: 10.09.2005 DE 102005043122
(43) Veröffentlichungstag der Anmeldung: 14.03.2007
(73) Patentinhaber: intelligeNDT Systems & Services GmbH, 91052 Erlangen (DE)
(72) Erfinder: Fischer, Eberhard, 91341 Röttenbach (DE); Meier, Rainer, 91058 Erlangen (DE); Mohr, Friedrich, 90482 Nürnberg (DE)
(74) Vertreter: Mörtel & Höfner

(56) Entgegenhaltungen:
- GB-A- 2 402 485
- US-A- 4 237 902
- US-A- 5 024 094
- ROY O ET AL: "Control of the ultrasonic beam transmitted through an irregular profile using a smart flexible transducer: modelling and application" ULTRASONICS, IPC SCIENCE AND TECHNOLOGY PRESS LTD. GUILDFORD, GB, Bd. 40, Nr. 1-8, Mai 2002 (2002-05), Seiten 243-246, XP004357202 ISSN: 0041-624X

## Beschreibung

Verfahren und Einrichtung zur Ultraschallprüfung eines Werkstückes mit einer unebenen Oberfläche

Die Erfindung bezieht sich auf ein Verfahren und Einrichtung zur Ultraschallprüfung eines Werkstückes mit einer unebenen Oberfläche.

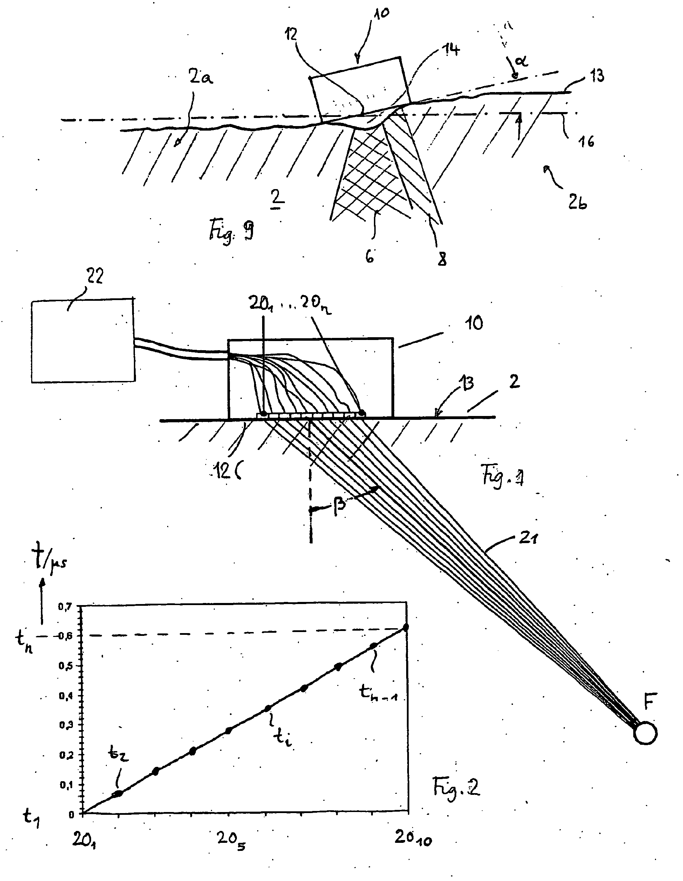

Insbesondere im Bereich von Schweißnähten weisen Werkstücke an Wurzeln und Decklage eine unebene Oberfläche auf, die in aller Regel von Hand geschliffen wird. Trotz einer solchen Handbeschleifung werden dabei ebene Flächen nicht erreicht. Bei Verschweißungen von Rohren aus nicht rostendem Stahl kommt es außerdem zu einem starken Einzug durch Schrumpfen beim Abkühlen, der zusätzliche Unebenheiten verursacht. Schweißverbindungen in Rohrleitungssystemen von Kernkraftwerken weisen außerdem am Rohrinnendurchmesser Andrehungen zur Anpassung der Innendruchmesser und Übergangsschrägen zum Ursprungsdurchmesser, Plattierungen an ferritischen Rohrleitungen, Pufferschweißungen auf das ferritische Material zum Anschweißen an austenitische Komponenten sowie Übergangsschrägen für Durchmessererweiterung an Stutzen auf. Dies alles bewirkt, dass die zur Prüfung einer solchen Schweißnaht eingesetzten Ultraschallprüfsensoren sowohl bei der Prüfung von innen als auch von außen auf unebenen, unregelmäßig welligen Werkstückoberflächen aufgesetzt und bewegt werden müssen. Ein Beispiel für eine solche unebene oder wellige Oberfläche eines Werkstückes ist in Figur 9 wiedergegeben. Gemäß dieser Figur sind zwei Teile 2a und 2b eines Werkstück 2, beispielsweise eine Rohrleitung aus einem austenitischen Stahl und ein Stutzen aus einem ferritischem Material, an einer Schweißnaht 6 über eine Pufferschweißung 8 miteinander verschweißt. Neben unvermeidbaren Oberflächenunebenheiten ergibt sich im Bereich der Schweißnaht 6 und der Pufferschweißung 8 eine ausgeprägte Welligkeit. Diese Welligkeit oder Unebenheit hat zur Folge, dass sich in dieser Zone zwischen der Oberfläche 13 des Werkstückes 2 und einem Ultraschallprüfkopf 10 mit ebener, starrer Koppelfläche 12 ein ungleichmäßiger Spalt 14 ergibt, der die Einschallbedingungen in das Werkstück 2 beeinflusst und eine Interpretation der Messergebnisse erschwert oder diese grundsätzlich verfälscht. Die Einschallbedingungen werden zusätzlich dadurch geändert, dass durch die Unebenheit der Oberfläche des Werkstückes 2, der im dargestellten Beispiel auch ein Versatz zwischen den beiden Teilen 2a und 2b überlagert ist, die Koppelfläche 12 nicht mehr parallel zu einer mittleren geradlinigen Oberflächenkontur 16 sondern unter einem unbekannten Neigungswinkel α zu dieser orientiert ist.

Der Spalt 14 ist mit einem Koppelmedium, in der Regel Wasser gefüllt. Durch Reflexionen im Spalt 14 zwischen Koppelfläche 12 und Oberfläche 13 werden Interferenzen verursacht, die im ungünstigen Fall das Ultraschallsignal um bis zu etwa 14dB schwächen können. Darüber hinaus wird an den Welligkeiten der Werkstückoberfläche der Ultraschallstrahl unregelmäßig gebrochen und die Ausbildung eines Schallbündels verhindert. Dies kann dazu führen, dass Fehlstellen (Reflektoren) im Werkstück 2 übersehen werden.

Um die mit dieser Unebenheit oder Welligkeit einhergehenden Probleme zu lösen, wurde versucht, die Prüfung von Prüfpositionen aus durchzuführen, an denen die Oberfläche 13 des Werkstückes 2 eben ist, d. h. in denen der Prüfkopf 10 möglichst flächig auf der Oberfläche 13 aufsitzt. Mit anderen Worten: Der Prüfkopf 10 wurde versetzt von der Schweißnaht 6 aufgesetzt. Eine solche Möglichkeit ist aber für eine Vielzahl von Anwendungsfällen auf Grund der vorstehend erläuterten Randbedingungen nicht praktikabel. Alternativ hierzu werden auch Prüfköpfe eingesetzt, die in einer Richtung parallel zur Welligkeit - im Beispiel der Figur 1 senkrecht zur Zeichenebene - schmal sind, so dass sie beim Bewegen des Prüfkopfes über die Schweißnaht der Kontur der Welle folgen können, so dass ein ausgeprägter, unregelmäßig geformter Koppelspalt 14, wie er in der Figur 9 dargestellt ist, nicht entsteht. Um in dieser Weise auf der Oberfläche 13 "reiten" zu können, müssen die Prüfköpfe sehr schmal ausgeführt werden. Mit solchen Prüfköpfen ergeben sich aber Schallfelder mit großen Öffnungswinkeln, die zur Prüfung eines Werkstückes mit größerer Wanddicke, im Beispiel ab etwa 30 mm, nicht mehr geeignet sind.

Aus der US-A-5,024,094 ist es bekannt, einen Ultraschallprüfkopf zu verwenden, bei dem eine Vielzahl von Wandlerelementen starr in einem linearen Array angeordnet sind. Für eine Untergruppe des Arrays wird durch Ansteuern aller Wandlerelemente dieser Untergruppe ein Abstand zwischen dieser Untergruppe und der Oberfläche des Werkstückes bestimmt, der für alle Wandlerelemente dieser Untergruppe gleich groß ist. Eine Welligkeit in dem von dieser Untergruppe beschallten Bereich führt somit auch bei dieser bekannten Vorgehensweise zu den vorstehend genannten Problemen.

Aus der Publikation S. Mahaut et al., Pipe Inspection using UT Smart flexible Transducer, Technical Paper, 8th ECNDT Barcelona 2002, ist ein Ultraschallprüfkopf bekannt, dessen Koppelfläche flexibel ist und sich an die Oberflächenkontur des Werkstückes anpassen kann. Der Ultraschallprüfkopf enthält hierzu eine Mehrzahl von in einer Reihe angeordneten, mechanisch voneinander getrennten Wandlerelementen, so dass sich das auf diese Weise gebildete Array an die Oberflächenkontur des Werkstückes anschmiegen kann und auf seiner Rückseite dieselbe Kontur aufweist. Diese rückseitige Kontur wird mit einer optischen Messanordnung vermessen. Die einzelnen Wandlerelemente des Arrays werden dann mit einer Verzögerungszeit angesteuert, die entsprechend dieser Kontur korrigiert ist, um auf diese Weise Einschallwinkel und Fokustiefe korrekt einzustellen. Der getrennte Aufbau der einzelnen Wandlerelemente mit Verschleißschicht, Anpassschicht, Piezoschwinger, Dämpfungsmasse und elektrischer Verdrahtung sowie deren mechanische Aufhängung und Wasserdichtheit ist jedoch sehr aufwendig. Außerdem weist ein solcher Prüfkopf nur eine begrenzte Haltbarkeit und Robustheit auf.

Der Erfindung liegt nun die Aufgabe zu Grunde, ein Verfahren zur Ultraschallprüfung eines Werkstückes mit einer unebenen Oberfläche anzugeben, das die vorstehend genannten Nachteile nicht aufweist. Außerdem liegt der Erfindung die Aufgabe zu Grunde, eine nach diesem Verfahren arbeitende Einrichtung anzugeben.

Bezüglich des Verfahrens wird die genannte Aufgabe gemäß der Erfindung gelöst mit einem Verfahren mit den Merkmalen des Patentanspruches 1. Bei dem Verfahren zur Ultraschallprüfung eines Werkstückes mit einer unebenen Oberfläche mit einem an das Werkstück akustisch angekoppelten Ultraschallprüfkopf, der eine Mehrzahl von starr in einem linearen Array angeordneten Wandlerelementen enthält, die mit einer für jedes Wandlerelement vorgegebenen Verzögerungszeit zeitverzögert ansteuerbar sind, wird ein Wandlerelement angesteuert und es wird die Laufzeit des Ultraschallsignals bestimmt, das von diesem Wandlerelement gesendet, von der Oberfläche reflektiert und von diesem Wandlerelement empfangen wird. Nachfolgend wird zumindest ein anderes Wandlerelement angesteuert und es wird die Laufzeit des Ultraschallsignals bestimmt, das von diesem anderen Wandlerelement gesendet, von der Oberfläche reflektiert und von diesem anderen Wandlerelement empfangen wird. Diese Laufzeiten werden zu einer Korrektur der Verzögerungszeiten herangezogen, und es werden anschließend die Wandlerelemente mit diesen korrigierten Verzögerungszeiten angesteuert. Durch diese Maßnahmen ist bei einfachem und robustem Aufbau des Ultraschallprüfkopfes eine Prüfung welliger Werkstückoberflächen möglich.

Wenn außerdem ein Neigungswinkel des Ultraschallprüfkopfes gegen eine mittlere geradlinige Oberflächenkontur des Werkstückes gemessen und bei der Ermittlung der korrigierten Verzögerungszeiten berücksichtigt wird, können durch eine Welligkeit der Oberfläche des Werkstücks hervorgerufene Schräglagen des Ultraschallprüfkopfes erkannt und durch entsprechend korrigierte Ansteuerung der Wandlerelemente kompensiert werden.

Hinsichtlich der Einrichtung wird die Aufgabe gemäß der Erfindung gelöst mit einer Einrichtung mit den Merkmalen des Patentanspruches 3, dessen Vorteile ebenso wie die Vorteile der ihm untergeordneten Patentansprüche den zu den jeweils zugehörigen Verfahrensansprüchen angegebenen Vorteilen entsprechen.

Zur weiteren Erläuterung der Erfindung wird auf die Ausführungsbeispiel der Zeichnung verwiesen. Es zeigen:
Figur 1 eine Einrichtung gemäß der Erfindung mit einem in einer Prüfposition auf einem ebenen Werkstück aufgesetzten Ultraschallprüfkopf, der ein lineares Array aus einer Mehrzahl von Wandlerelementen enthält,
Figur 2 ein Diagramm, in dem die Zeitverzögerung zwischen den Wandlerelementen des Arrays gegen die Position der Wandlerelemente im Array aufgetragen ist,
Figur 3 ein Prinzipbild zum Veranschaulichen des erfindungsgemäßen Verfahrens,
Figur 4 eine vorteilhafte Ausgestaltung eines Ultraschallprüfkopfes gemäß der Erfindung ebenfalls in einem schematischen Prinzipbild,
Figuren 5 und 6 jeweils ein Diagramm, in dem die mit den Wandlerelementen des Arrays für unterschiedliche Oberflächenkonturen gewonnenen Informationen über den Abstand zwischen Wandlerelement und Oberfläche des Werkstückes veranschaulicht ist,
Figur 7 die Einrichtung gemäß der Erfindung mit einem in einem unebenen Bereich des Werkstückes aufgesetzten Ultraschallprüfkopf,
Figur 8 ein Diagramm, in dem die korrigierte Zeitverzögerung zwischen den einzelnen Wandlerelementen des Arrays gegen die Position der Wandlerelemente für die in Figur 7 gezeigte Prüfsituation aufgetragen ist,
Figur 9 ein Werkstück mit einer unebenen Oberfläche mit einem im Bereich einer Schweißnaht aufgesetzten Prüfkopf in einem schematischen Längsschnitt.

Gemäß Figur 1 enthält der Ultraschallprüfkopf 10 einer Einrichtung gemäß der Erfindung eine Mehrzahl n von starr in einem linearen Array angeordneten Wandlerelementen 20_{1,...i,...n}. Zwischen den Empfangs- bzw. Sendeflächen der Wandlerelemente 20ᵢ des Arrays und der unmittelbar auf die ebene Oberfläche 13 des Werkstückes 2 aufgesetzten Koppelfläche 12 befindet sich als Vorlaufstrecke eine dünne planparallele Anpassschicht, deren Dicke vorzugsweise gleich der halben Mittenwellenlänge λ/2 oder ein Mehrfaches davon des zur Prüfung verwendeten Ultraschallsignals 21 ist, und deren akustische Impedanz möglichst an die akustische Impedanz eines zur Kopplung verwendeten fluiden Koppelmediums, in der Regel Wasser, angeglichen ist. Diese dünne Anpassschicht ist in der Figur aus Gründen der Übersichtlichkeit nicht dargestellt.

Die Wandlerelemente 20₁ bis 20ₙ werden von einer Steuer- und Auswerteeinrichtung 22 mit einer für jedes Wandlerelement 20₁ bis 20ₙ vorgegebenen Verzögerungszeit t₁ bis tₙ angesteuert, um auf diese Weise den Einschallwinkel β und die Lage des Fokus F eines in das Werkstück 2 eingekoppelten Ultraschallsignales 21 einzustellen. Im dargestellten Beispiel befindet sich im Bereich des Fokus F eine Fehlstelle, die zu einem Echosignal führt, das von den Wandlerelementen 20₁ bis 20ₙ empfangen wird. Auf Grund des bekannten Einschallwinkels β und der gemessenen Laufzeit des Echosignals kann die Fehlstelle im Werkstück 2 lokalisiert werden.

In Figur 2 ist nun für die einzelnen Wandlerelemente 20₁ bis 20ₙ die Verzögerungszeit t₁ bis tₙ in µs angegeben, wobei im Beispiel 10 Wandlerelemente 20₁ bis 20₁₀ vorgesehen sind. Der Figur ist nun zu entnehmen, dass die Verzögerungszeiten tᵢ bei einem Werkstück mit ebener Oberfläche zwischen dem ersten Wandlerelement 20₁ und den Wandlerelementen 20ᵢ mit wachsendem Abstand des Wandlerelementes 20ᵢ vom ersten Wandlerelement 20₁ zunehmen. Im dargestellten Beispiel wird ohne Fokussierung nur ein von Null verschiedener Einschallwinkel β erzeugt, so dass die Verzögerungszeiten tᵢ auf einer Geraden liegen, und somit der Unterschied der Verzögerungszeit zwischen jeweils benachbarten Wandlerelementen 20ᵢ und 20_{i±1} konstant ist. Wird zusätzlich eine elektronische Fokussierung durchgeführt, ergibt sich ein gekrümmter Kurvenverlauf.

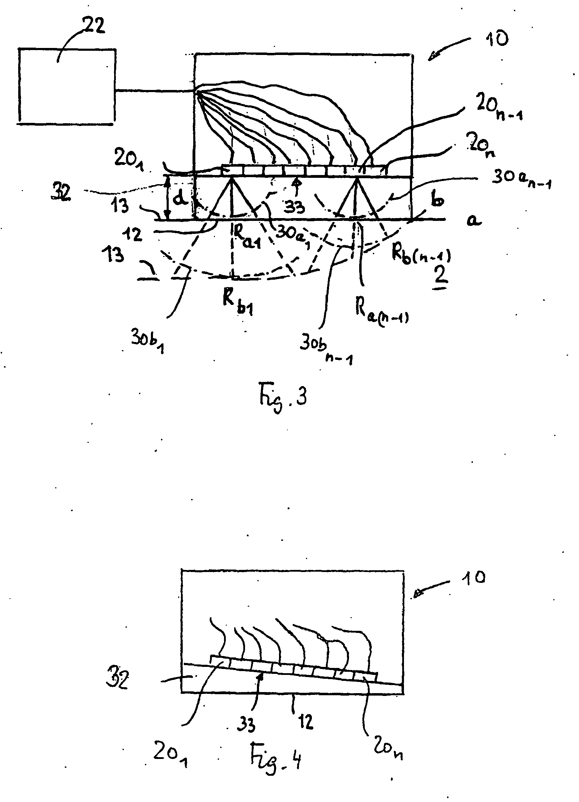

Figur 3 zeigt nun zwei Prüfsituationen, in denen sich der Ultraschallprüfkopf 10 über dem Werkstück 2 in einem Bereich mit ebener Oberfläche 13a (durchgezogene Oberflächenkontur) und in einem Bereich mit konkav gekrümmter Oberfläche 13b (gestrichelte Oberflächenkontur) befindet. Zur besseren Veranschaulichung ist der sich durch eine Anpassschicht 32 ergebende Abstand d zwischen einer Empfangs- bzw. Sendefläche 33 der Wandlerelemente 20ᵢ und der mit der Koppelfläche 12 praktisch zusammenfallenden ebenen Oberfläche 13a des Werkstückes 2 übertrieben dargestellt.

Mit der Steuer- und Auswerteeinrichtung 22 werden nun zeitlich nacheinander die Wandlerelemente 20₁ bis 20ₙ in einer Betriebsart angesteuert, in der diese jeweils für sich genommen im Impuls-Echo-Betrieb arbeiten. Mit anderen Worten: Zunächst wird das Wandlerelement 20₁ angesteuert, und die von diesem Wandlerelement 20₁ gesendeten Ultraschallwellen breiten sich mit einem großen Öffnungswinkel zum Werkstück 2 hin aus. An der Oberfläche 13a des Werkstückes 2 werden die Ultraschallwellen reflektiert und erzeugen ein Eintrittsechosignal. Vom Wandlerelement 20₁ werden im wesentlichen nur diejenigen reflektierten Ultraschallwellen als Eintrittsechosignal empfangen, die senkrecht auf die Oberfläche 13a, d. h. im Punkt Rₐ₁ auftreffen. Die Laufzeit dieses Eintrittsechosignales, d. h. des von der Oberfläche 13 a reflektierten und vom Wandlerelement 20₁ empfangenen Ultraschallsignales wird gemessen und in eine Wegstrecke umgerechnet, die in diesem Fall gleich dem Abstand d zwischen Empfangs- bzw. Sendefläche 33 und Oberfläche 13a ist. Wenn die tatsächliche Oberflächenkontur des Werkstückes 2 in der Prüfposition unbekannt ist, könnte sich der Punkt Rₐ₁ der Oberfläche des Werkstückes 2, von dem aus die empfangenen Echosignale ausgehen, auch auf einem Kreisbogen 30a₁ befinden, der in der Figur strichpunktiert dargestellt ist.

Anschließend erfolgt eine Ansteuerung des Wandlerelementes 20₂ und die Laufzeit der vom Wandlerelement 20₂ empfangenen Echosignale wird ebenfalls gemessen. Auf diese Weise wird jedes der Wandlerelemente 20₁ bis 20ₙ angesteuert. In der Figur ist noch die Situation für das Wandlerelement 20ₙ₋₁ eingezeichnet, für das sich im für die ebene Oberfläche 13a dieselben Verhältnisse ergeben wie für das Wandlerelement 20₁ (Reflexion des Eintrittsechosignales in Rₐ₍ₙ₋₁₎, das bei Unkenntnis der Kontur auf dem Kreisbogen 30aₙ₋₁ liegen kann.

Im Falle der ebenen Oberfläche 13a erreicht das Eintrittsechosignal jedes Wandlerelement 20₁ bis 20ₙ nach derselben Laufzeit, die es benötigt, um den doppelten Abstand d zwischen Sende- bzw. Empfangsfläche 33 der Wandlerelemente 20₁ bis 20ₙ und Oberfläche 13a zurückzulegen.

Gestrichelt ist nun eine Situation eingezeichnet, die sich ergibt, wenn eine konkav gekrümmte Oberfläche 13b vorliegt. Der Figur ist zu entnehmen, dass in diesem Fall das Wandlerelement 20₁ ein Eintrittsechosignal für eine senkrecht zur Sendefläche emittierte Ultraschallwelle vom Punkt R_{b1} erhält. Auch hier können, eine Unkenntnis der tatsächlichen Oberflächenkontur unterstellt, die Eintrittsechosignale jedoch von Punkten stammen, die auf dem Kreisbogen 30b₁ liegen. Im dargestellten Beispiel empfängt nun das Wandlerelement 20ₙ₋₁ das Eintrittsechosignal von einem Punkt R_{b(n-1)} der Oberfläche 13b, der nicht in Richtung der Normalen des Wandlerelementes 20ₙ₋₁ liegt. Auch hier können die Eintrittsechosignale jedoch von Punkten stammen, die auf dem Kreisbogen 30bₙ₋₁ liegen.

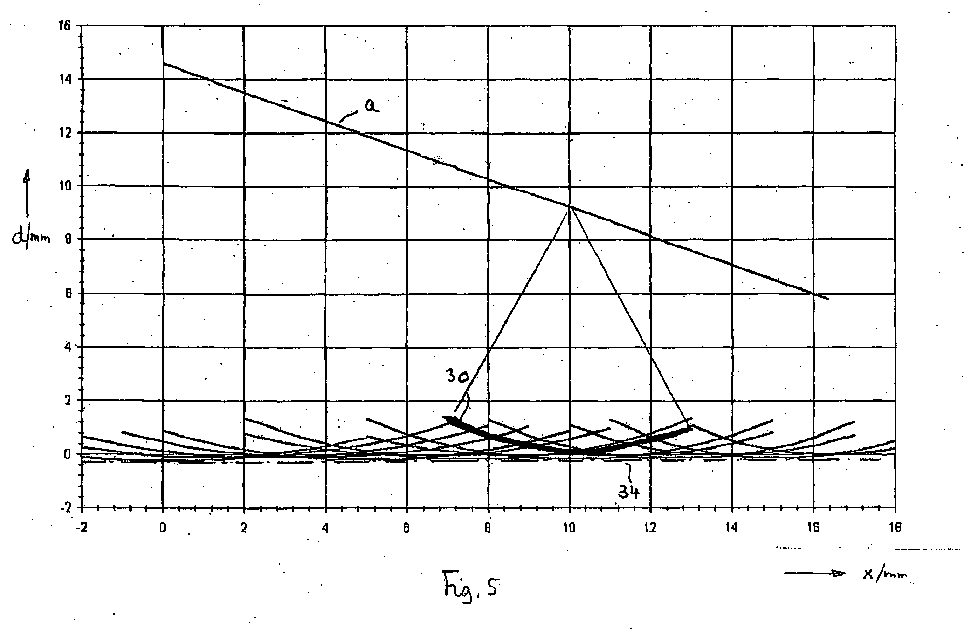

In Figur 5 ist ein Ultraschallprüfkopf 10 veranschaulicht, bei dem anstelle einer planparallelen Anpassschicht, wie sie in Figur 4 übertrieben veranschaulicht ist, eine keilförmige Vorlaufstrecke oder Anpassschicht 32 zwischen der Empfangs-bzw. Sendefläche 33 und der Koppelfläche 12 vorgesehen ist, um bereits ohne Zeitverzögerungen der Wandlerelemente 20₁ bis 20ₙ einen von 0° verschiedenen Einschallwinkel zu erzielen.

Figur 5 zeigt nun eine Situation wie sie sich bei Verwendung eines in Figur 4 dargestellten Prüfkopfes auf einer ebenen Oberfläche ergibt. In dieser Figur ist die mit den einzelnen Ultraschallwandlern mit Hilfe der Laufzeit des Echosignals, der Schallgeschwindigkeit und geometrischen Gestalt der Anpassschicht und der Schallgeschwindigkeit des Koppelmediums jeweils ermittelte Entfernung d der Oberfläche von der Empfangs- bzw. Sendefläche aufgetragen gegen die Längsausdehnung x des Arrays. Im Beispiel ist das Array auf einer keilförmigen Anpassschicht mit einem Keilwinkel von 28° angeordnet, mit dem es unmittelbar auf der ebenen Oberfläche des Werkstückes aufsitzt. In der Figur ist die Lage der Empfangs- bzw. Sendefläche der Wandlerelemente durch die Linie a angegeben. Der Figur ist nun zu entnehmen, dass jedes Wandlerelement ein Eintrittsechosignal empfängt, dem eine bestimmte Entfernung zugeordnet werden kann, wobei nicht feststeht, aus welcher Richtung das Eintrittsechosignal empfangen worden ist. Deshalb ist jedem Wandlerelement im Diagramm ein Bogen zugeordnet, der mögliche Positionen des Punktes der Oberfläche wiedergibt, von dem die Eintrittsechosignale empfangen werden. So ist dem Wandlerelement, das sich etwa in der Position x = 10 mm befindet, ein Bogen 30 zugeordnet, der in der Figur fett hervorgehoben ist. Das Wandlerelement in der Position x = 10 mm erfasst zwar den Abstand d zur Oberfläche des Werkstückes, der im dargestellten Beispiel etwa 9mm beträgt, nicht jedoch dessen Richtung. Werden nun die Messungen für alle Wandlerelemente in der gleichen Weise durchgeführt, so ist anhand des Diagramms eine Einhüllende 34 entlang der Nulllinie zu erkennen, die die Oberflächenkontur des Werkstückes wiedergibt, bei dem es sich in diesem Fall um ein ebenes Werkstück handelt.

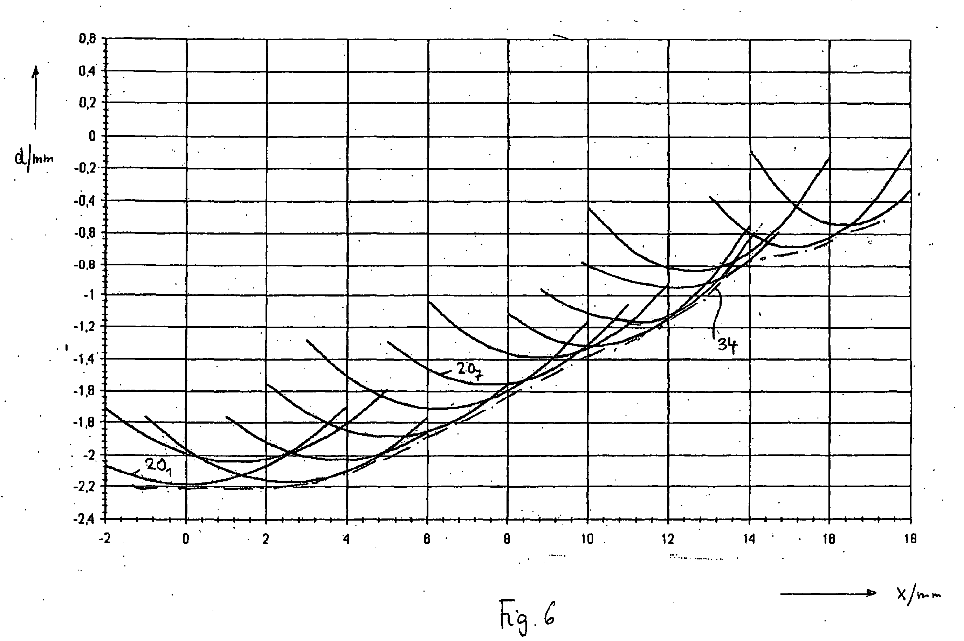

Anders stellt sich die Situation in Figur 6 dar, in der ebenfalls der mögliche Abstand zwischen dem Werkstück und der Koppelfläche des Ultraschallprüfkopfes gegen die Position der Wandlerelemente im Ultraschallprüfkopf aufgetragen ist. Deutlich ist zu erkennen, dass sich in diesem Fall eine Einhüllende 34 ergibt, die ebenfalls die Oberflächenkontur des Werkstückes im Bereich der Koppelfläche wiedergibt und signifikant von einer ebenen Oberfläche abweicht.

Diese Information wird nun benutzt, um die Zeitverzögerung für die einzelnen Wandlerelemente mit Hilfe der Steuer- und Auswerteeinrichtung 22 an die unterschiedliche Form des Koppelspaltes anzupassen und den korrekten Einschallwinkel β zur mittleren Oberflächenkontur 16 einzustellen. Der Fig. 6 ist dabei zu entnehmen, dass die Oberfläche des Werkstücks vom Wandlerelement 20₁ etwa um 0,6 mm weiter entfernt ist als vom Wandlerelement 20₇. Bei vorgegebenem Einschallwinkel und bekannten Schallgeschwindigkeiten von Werkstück und Koppelmedium sowie bekannter Schallgeschwindigkeit und Gestalt einer gegebenenfalls vorhandenen Anpassschicht lässt sich dann rechnerisch aus dieser Abstandsdifferenz, die rechnerisch aus der zwischen den Wandlerelementen 20₁ und 20₇ gemessenen Laufzeitdifferenz ermittelt worden ist, und aus dem aus der Einhüllenden 34 sich ergebenden Neigungswinkel der Oberfläche des Werkstückes die erforderliche Zeitverzögerung zwischen den Wandlerelementen 20₁ und 20₇ berechnen.

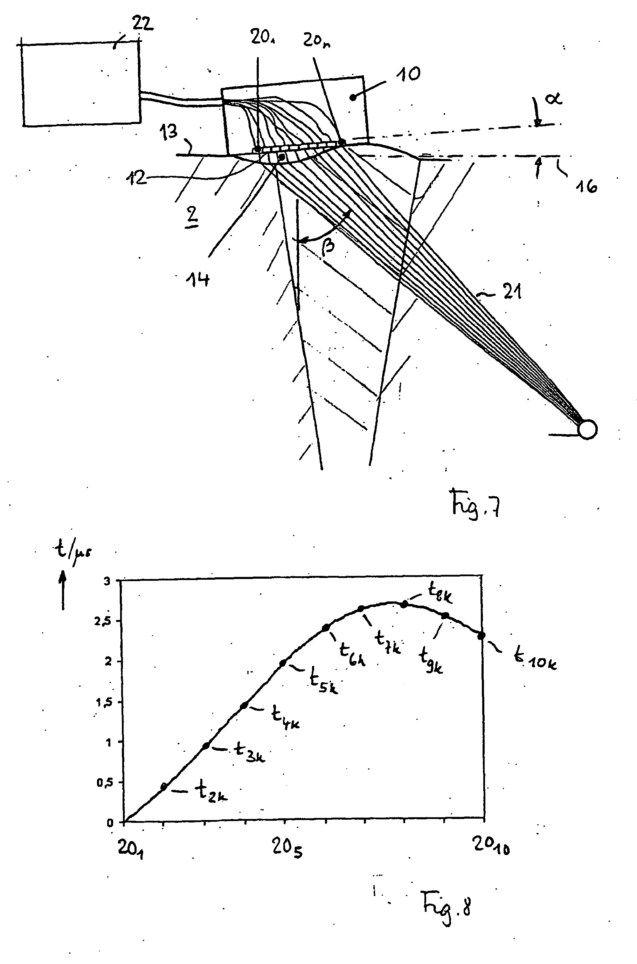

Auf diese Weise kann der vorgegebene Einschallwinkel β auch bei welliger Oberfläche 13 des Werkstücks 2 korrekt eingestellt werden, wie dies in Figur 7 dargestellt ist. Dieser Figur ist nun außerdem zu entnehmen, dass die Koppelfläche 12 des Ultraschallprüfkopfes 10 um den Neigungswinkel α gegen die mittlere Oberflächenkontur 16 geneigt ist. Dieser Neigungswinkel α wird ebenfalls erfasst und bei der Korrektur der Verzögerungszeiten berücksichtigt.

In Figur 8 ist sind nun für das in Figur 7 dargestellte Beispiel für die einzelnen Wandlerelemente 20₁ bis 20₁₀ die korrigierten Verzögerungszeiten t₁ₖ bis t₁₀ₖ in µs angegeben. Der Figur ist zu entnehmen, dass der Verlauf der korrigierten Verzögerungszeiten t₁ₖ bis t₁₀ₖ signifikant vom linearen Verlauf gemäß Figur 3 abweicht.

## Patentansprüche

1. Verfahren zur Ultraschallprüfung eines Werkstückes (2) mit einer unebenen Oberfläche (13, 13b) mit einem an das Werkstück (2) akustisch angekoppelten Ultraschallprüfkopf (10), der eine Mehrzahl von starr in einem linearen Array angeordneten Wandlerelementen (20₁ bis 20ₙ) enthält, die mit einer für jedes Wandlerelement (20₁ bis 20ₙ) vorgegebenen Verzögerungszeit (t₁ bis tₙ) zeitverzögert ansteuerbar sind, **gekennzeichnet durch** die folgenden Schritte:
a) Ansteuern eines Wandlerelements (20₁ bis 20ₙ) und Bestimmen der Laufzeit des Ultraschallsignals, das von diesem Wandlerelement (20₁ bis 20ₙ) gesendet, von der Oberfläche (13, 13b) reflektiert und von diesem Wandlerelement (20₁ bis 20ₙ) empfangen wird,
b) nachfolgendes Ansteuern zumindest eines anderen Wandlerelements (20₁ bis 20ₙ) und Bestimmen der Laufzeit des Ultraschallsignals, das von diesem anderen Wandlerelement (20₁ bis 20ₙ) gesendet, von der Oberfläche (13, 13b), reflektiert und von diesem anderen Wandlerelement (20₁ bis 20ₙ) empfangen wird,
c) Korrigieren der Verzögerungszeiten (t₁ bis tₙ) unter Heranziehen dieser Laufzeiten,
d) anschließendes Ansteuern der Wandlerelemerite (20₁ bis 20ₙ) mit den korrigierten Verzögerungszeiten (t₁ₖ bis tₙₖ).

2. Verfahren nach Anspruch 1, **gekennzeichnet durch**
a) Messen eines Neigungswinkels (α) des Ultraschallprüfkopfes (10) gegen eine mittlere geradlinige Oberflächenkontur (16) des Werkstückes (2) und
b) Korrigieren der Verzögerungszeiten (t₁ bis tₙ) unter Berücksichtigung des Neigungswinkels.

3. Einrichtung zur Ultraschallprüfung eines Werkstückes (2) mit einer unebenen Oberfläche (13, 13b) mit einem an das Werkstück (2) akustisch angekoppelten Ultraschallprüfkopf (10), der eine Mehrzahl von starr in einem linearen Array angeordneten Wandlerelementen (20₁ bis 20ₙ) enthält, umfassend eine Steuer- und Auswerteeinrichtung (22) zum zeitverzögerten Ansteuer der Wandlerelemente (20₁ bis 20ₙ) mit einer für jedes Wandlerelement (20₁ bis 20ₙ) vorgegebenen Verzögerungszeit (t₁ bis tₙ), die durch die folgende Betriebsart **gekennzeichnet** ist:
a) Ansteuern eines Wandlerelements (20₁ bis 20ₙ) und Bestimmen der Laufzeit des Ultraschallsignals, das von diesem Wandlerelement (20₁ bis 20ₙ) gesendet, von der Oberfläche (13, 13b) reflektiert und von diesem Wandlerelement (20₁ bis 20ₙ) empfangen wird,
b) nachfolgendes Ansteuern zumindest eines anderen Wandlerelements (20₁ bis 20ₙ) und Bestimmen der Laufzeit des Ultraschallsignals, das von diesem anderen Wandlerelement (20₁ bis 20ₙ) gesendet, von der Oberfläche (13,13b) reflektiert und von diesem anderen Wandlerelement (20₁ bis 20ₙ) empfangen wird,
c) Korrigieren der Verzögerungszeiten (t₁ bis tₙ) unter Heranziehen dieser Laufzeiten,
d) anschließendes Ansteuern der Wandlerelemente (20₁ bis 20ₙ) mit den korrigierten Verzögerungszeiten (t₁ₖ bis tₙₖ).

4. Einrichtung nach Anspruch 3, **gekennzeichnet durch** eine Messeinrichtung zum Messen eines Neigungswinkels (α) des Ultraschallprüfkopfes (10) gegen eine mittlere geradlinige Oberflächenkontur (16) des Werkstückes (2).

5. Einrichtung nach Anspruch 3 oder 4, **dadurch gekennzeichnet, dass** zwischen Koppelfläche (12) und Wandlerelementen (20₁ bis 20ₙ) des Ultraschallprüfkopfes (10) eine Anpassschicht (32) vorgesehen ist, deren akustische Impedanz an die eines zur Ankopplung des Ultraschallprüfkopfes (10) an das Werkstück (2) verwendeten Koppelfluids angepasst ist.

## Claims

1. Method for the ultrasonic testing of a workpiece (2) having an uneven surface (13, 13b) with an ultrasonic test head (10), acoustically coupled to the workpiece (2), which contains a multiplicity of transducer elements (20₁ to 20ₙ) arranged rigidly in a linear array, which can be driven in a time-delayed manner with a delay time (t₁ to tₙ) predetermined for each transducer element (20₁ to 20ₙ), **characterized by** the following steps:
a) driving a transducer element (20₁ to 20ₙ) and determining the propagation time of the ultrasonic signal which is transmitted by this transducer element (20₁ to 20ₙ), reflected from the surface (13, 13b) and received by this transducer element (20₁ to 20ₙ),
b) subsequent driving of at least one other transducer element (20₁ to 20ₙ) and determining the propagation time of the ultrasonic signal which is transmitted by this other transducer element (20₁ to 20ₙ), reflected from the surface (13, 13b) and received by this other transducer element (20₁ to 20ₙ),
c) correcting the delay times (t₁ to tₙ) by using these propagation times,
d) subsequent driving of the transducer elements (20₁ to 20ₙ) with the corrected delay times (t₁ₖ to tₙₖ)

2. Method according to Claim 1, **characterized by**
a) measuring an angle of inclination (α) of the ultrasonic test head (10) with respect to a mean straight-line surface contour (16) of the workpiece (2), and
b) correcting the delay times (t₁ to tₙ) by taking into consideration the angle of inclination.

3. Device for the ultrasonic testing of a workpiece (2) having an uneven surface (13, 13b) with an ultrasonic test head (10), acoustically coupled to the workpiece (2), which contains a multiplicity of transducer elements (20₁ to 20ₙ) arranged rigidly in a linear array, comprising a control and evaluating device (22) for driving the transducer elements (20₁ to 20ₙ) in a time-delayed manner with a delay time (t₁ to tₙ) predetermined for each transducer element (20₁ to 20ₙ), which is **characterized by** the following operating mode:
a) driving a transducer element (20₁ to 20ₙ) and determining the propagation time of the ultrasonic signal which is transmitted by this transducer element (20₁ to 20ₙ), reflected from the surface (13, 13b) and received by this transducer element (20₁ to 20ₙ),
b) subsequent driving of at least one other transducer element (20₁ to 20ₙ) and determining the propagation time of the ultrasonic signal which is transmitted by this other transducer element (20₁ to 20ₙ), reflected from the surface (13, 13b) and received by this other transducer element (20₁ to 20ₙ),
c) correcting the delay times (t₁ to tₙ) by using these propagation times,
d) subsequent driving of the transducer elements (20₁ to 20ₙ) with the corrected delay times (t₁ₖ to tₙₖ).

4. Device according to Claim 3, **characterized by** a measuring device for measuring an angle of inclination (α) of the ultrasonic test head (10) with respect to a mean straight-line surface contour (16) of the workpiece (2).

5. Device according to Claim 3 or 4, **characterized in that** an adaptation layer (32) is provided between coupling face (12) and transducer elements (20₁ to 20ₙ) of the ultrasonic test head (10), the acoustic impedance of which is matched to that of a coupling fluid used for coupling the ultrasonic test head (10) to the workpiece (2).

## Revendications

1. Procédé de contrôle par ultrasons d'une pièce (2) ayant une surface (13, 13b) inégale par une tête (10) de contrôle par ultrasons couplée acoustiquement à la pièce (2) et comportant une multiplicité d'éléments (20₁ à 20ₙ) transducteurs disposés de manière fixe suivant une matrice linéaire et pouvant être excités avec un retard dans le temps en ayant un temps (t₁ à tₙ) de retard prescrit pour chaque élément (20₁ à 20ₙ) transducteur, **caractérisé par** les stades suivantes :
a) on excite un élément (20₁ à 20ₙ) transducteur et on détermine le temps du parcours du signal ultrasonore, qui est émis par cet élément (20₁ à 20ₙ) transducteur, qui est réfléchi par la surface (13, 13b) et qui est reçu par cet élément (20₁ à 20ₙ) transducteur,
b) on excite ensuite au moins un autre élément (20₁ à 20ₙ) transducteur et on détermine le temps de parcours du signal ultrasonore, qui est émis par cet autre élément (20₁ à 20ₙ) transducteur, qui est réfléchi par la surface (13, 13b) et qui est reçu par cet élément (20₁ à 20ₙ) transducteur,
c) on corrige les temps (t₁ à tₙ) de retard en tirant parti de ces temps de parcours,
d) on excite ensuite les éléments (20₁ à 20ₙ) transducteurs avec les temps (t₁ₖ à tₙₖ) de retard corrigés.

2. Procédé suivant la revendication 1, **caractérisé par**
a) une mesure d'un angle (α) d'inclinaison de la tête (10) de contrôle par ultrasons par rapport à un contour (16) de surface rectiligne moyen de la pièce (2) et
b) on corrige les temps (t₁ à tₙ) de retard en tenant compte de l'angle d'inclinaison.

3. Dispositif de contrôle par ultrasons d'une pièce ayant une surface (13, 13b) inégale, comprenant une tête (10) de contrôle par ultrasons couplée acoustiquement à la pièce (2) et comportant une multiplicité d'éléments (20₁ à 20ₙ) transducteurs disposés de manière fixe suivant une matrice linéaire, comprenant un dispositif (22) de commande et d'exploitation pour exciter avec retard dans le temps les éléments (20₁ à 20ₙ) transducteurs avec un temps (t₁ à tₙ) de retard prescrit pour chaque élément (20₁ à 20ₙ) transducteur, qui est **caractérisé par** le type de fonctionnement suivant :
a) on excite un élément (20₁ à 20ₙ) transducteur et on détermine le temps du parcours du signal ultrasonore, qui est émis par cet élément (20₁ à 20ₙ) transducteur, qui est réfléchi par la surface (13, 13b) et qui est reçu par cet élément (20₁ à 20ₙ) transducteur,
b) on excite ensuite au moins un autre élément (20₁ à 20ₙ) transducteur et on détermine le temps de parcours du signal ultrasonore, qui est émis par cet autre élément (20₁ à 20ₙ) transducteur, qui est réfléchi par la surface (13, 13b) et qui est reçu par cet élément (20₁ à 20ₙ) transducteur,
c) on corrige les temps (t₁ à tₙ) de retard en tirant parti de ces temps de parcours,
d) on excite ensuite les éléments (20₁ à 20ₙ) transducteurs avec les temps (t₁ₖ à tₙₖ) de retard corrigés.

4. Dispositif suivant la revendication 3, **caractérisé par** un dispositif de mesure d'un angle (α) d'inclinaison de la tête (10) de contrôle par ultrasons par rapport à un contour (16) de surface rectiligne moyen de la pièce (2).

5. Disposition suivant la revendication 3 ou 4, **caractérisé en ce qu'**il est prévu, entre la surface (12) de couplage et des éléments (20₁ à 20ₙ) transducteurs de la tête (10) de contrôle par ultrasons, une couche (32) d'adaptation dont l'impédance acoustique est adaptée à un fluide de couplage utilisé pour coupler la tête (10) de contrôle par ultrasons à la pièce (2).
